# EUROPÄISCHE PATENTANMELDUNG

(11) **EP 3 190 379 A1**
(43) Veröffentlichungstag der Anmeldung: **12.07.2017**
(21) Anmeldenummer: 16150520.1
(22) Anmeldetag: 08.01.2016
(51) Int. Cl.: G01B 9/02, G01M 11/02, G06T 7/00

(54) **INTERFEROMETRISCHES STITCHING-VERFAHREN**

(71) Anmelder: SwissOptic AG, 9435 Heerbrugg (CH)
(72) Erfinder: Garbusi, Eugenio, 9000 St. Gallen (CH); Dauerer, Andreas, 9443 Widnau (CH)
(74) Vertreter: Hepp Wenger Ryffel AG

(57) **Zusammenfassung**

Die vorliegende Erfindung betrifft ein Verfahren zur Bestimmung einer Oberfläche eines Testkörpers, umfassend die Schritte:
a) interferometrische Messung von Teilbereichen der zu bestimmenden Oberfläche des Testkörpers, wobei sich jeweils benachbarte Teilbereiche überlappen,
b) Projektion der Datensätze aus der Messung der Teilbereiche in ein globales Koordinatensystem,
c) Bestimmung der Position benachbarter Teilbereiche im globalen Koordinatensystem,
dadurch gekennzeichnet, dass die Bestimmung der Position benachbarter Teilbereiche anhand von mindestens einem Oberflächenmerkmal im Überlappungsbereich der benachbarten Teilbereiche erfolgt.

## Beschreibung

Die vorliegende Erfindung betrifft ein interferometrisches Stitching-Verfahren, insbesondere für hoch geöffnete und gekrümmte Oberflächen.

Optische Systeme werden in einer Vielzahl technischer Bereiche eingesetzt. Einige Anwendungen erfordern den Einsatz von Hochpräzisionsoptiken. Beispielhaft seien Optiken für astronomische Anwendungen wie Teleskope genannt. Es ist erforderlich, die entsprechenden Optiken mit hoher Präzision zu fertigen und im Anschluss mit einer präzisen Methode zu bestimmen, ob das gefertigte optische Instrument den gesetzten Qualitätsansprüchen genügt.

Die vorstehende Aufgabe wird dadurch erschwert, dass in vielen optischen Systemen (z.B. Ferngläsern, Mikroskoplinsen, Lithographieobjektiven, Videoprojektoren, Handykameras, Photoobjektiven oder DVD-Laufwerken) heutzutage asphärische optische Elemente eingebaut werden, um das Leistungsvermögen dieser Systeme zu erhöhen beziehungsweise deren Grösse zu verringern. Eine einzelne asphärische Linse kann optische Eigenschaften aufweisen, die selbst mit mehreren sphärischen Linsen schwer erreichbar sind. Dadurch ermöglicht die asphärische Linse eine Steigerung der optischen Qualität sowie eine Reduzierung von Gewicht- und Platzbedarf optischer Geräte.

Unter einem asphärischen optischen Element wird gemäss der vorliegenden Erfindung ein optisches Element mit mindestens einer Oberfläche verstanden, welche zumindest teilweise von einer idealen Kugeloberfläche abweicht. Asphärische optische Elemente besitzen einen höheren Freiheitsgrad hinsichtlich ihrer Oberflächengestaltung, sind schwieriger präzise zu fertigen und zu messen.

Ein gängiges Verfahren zur Messung der Form optischer Oberflächen ist die Interferometrie. Allgemein beschrieben wird bei der Interferometrie eine durch Überlagerung von zwei Wellenfronten erzeugte Interferenz gemessen. Beispielsweise kann eine Wellenfront aus kohärentem Licht teilweise an einer Referenzoberfläche und teilweise an einer zu messenden Testoberfläche reflektiert werden. Die reflektierten Wellenfronten werden anschliessend wieder zusammengeführt. In einem Detektor kann ein charakteristisches Interferenzmuster gemessen werden, das durch die unterschiedlichen Weglängen erzeugt wird, welche die an der Referenzoberfläche und an der Testoberfläche reflektierten Wellenfronten zurückgelegt haben. Mit diesem Verfahren können kleine Abweichungen zwischen der Referenz- und der Testoberfläche gemessen werden. Diese Abweichungen sind als Abweichungen im beobachteten Interferenzmuster vom theoretisch zu erwartenden Interferenzmuster detektierbar.

Es wird vorzugsweise mit einer Wellenfront gearbeitet, welche der Form der Oberfläche der Testoberfläche entspricht. Darunter versteht man eine Wellenfront mit einer derartigen Form, dass die Lichtstrahlen der Wellenfront im Wesentlichen orthogonal auf der gesamten Testoberfläche auftreffen, so dass die reflektierten Lichtstrahlen den gleichen Weg zurücklegen wie das einfallende Licht und das von der Referenzoberfläche reflektierte Licht (Nulltest-Verfahren). Um die Form der Wellenfront an die Form der Testoberfläche anzupassen, wird die Wellenfront beispielsweise durch ein sogenanntes Nullelement geleitet. Die Form einer Oberfläche des Nullelements entspricht im Wesentlichen der Form der Testoberfläche. Idealerweise wandert das von der Testoberfläche reflektierte Licht auf dem gleichen Weg zurück wie das einfallende Licht zur Testoberfläche gelangt ist. Bei einer Abweichung der Testoberfläche von der gewünschten Idealform wandert das von der Testoberfläche reflektierte Licht auf einem anderen Weg zurück; es kommt zu den vorstehend beschriebenen Abweichungen im Interferenzmuster.

Mit Nullelementen arbeitende Interferometer lassen sich gut kalibrieren und weisen nur eine geringfügige Verfälschung des Messergebnisses (aufgrund von Strahlenabweichungen) auf. Zudem bleibt die Streifendichte der erhaltenen Interferogramms niedrig und ist einer Auswertung zugänglich.

Die Bereitstellung geeigneter Nullelemente für vollständige asphärische Oberflächen ist jedoch sehr komplex, aufwendig und teuer. Gerade für die Prüfung von in geringer Stückzahl gefertigten optischen Elementen ist die Bereitstellung der erforderlichen Nullelemente wirtschaftlich unverhältnismässig.

Es wurde daher als Alternative das sogenannte interferometrische Stitching-Verfahren vorgeschlagen. Hierbei werden jeweils sequentiell nur Abschnitte der Oberfläche eines vorzugsweise asphärischen Testkörpers gemessen. Diese Oberflächenabschnitte können, sofern sie ausreichend klein gewählt sind, ohne Einsatz eines Nullelements vermessen werden. Die so erhaltenen Oberflächendaten für Teilbereiche der gesamten Testoberfläche werden anschliessend zusammengeführt ("stitching"), und es wird eine vollständige Karte der Testoberfläche erhalten.

Ein derartiges Verfahren ist beispielsweise in der US-6,956,657 B2 beschrieben. Es werden hierbei Teilbereiche (Sub-Aperturen) einer Testoberfläche sequentiell interferometrisch gemessen, wobei die Teilbereiche überlappen. Die sequentielle Messung wird dadurch realisiert, dass der Probekörper unter dem Interferometer derart bewegt wird (durch Drehen, Kippen und Translation), dass jeweils ein Teilbereich der Testoberfläche unter dem Interferometer angeordnet ist und gemessen wird.

Ein wesentliches Problem eines Stitching-Verfahrens besteht darin, die für die Teilbereiche erhaltenen Daten korrekt zu einem Gesamtbild zusammenzusetzen. In der US-6,956,657 B2 wird diesbezüglich vorgeschlagen, die für die Teilbereiche erhaltenen Datensätze auf ein globales Koordinatensystem zu projizieren und die Teilbereiche dadurch korrekt zusammenzufügen, dass anhand ausgewählter Kompensatoren (welche Anordnungsfehlern der Testoberflächen zugeordnet sind) Diskrepanzen zwischen den Teilbereichs-Datensätzen minimiert werden. Genauer werden die Kompensatorenwerte in den Überlappungsbereichen der Teilbereichsmessungen durch mathematische Methoden gleichzeitig minimiert. Das Verfahren erfordert eine möglichst präzise Bewegung des Probekörpers durch das Interferometer und eine komplexe Software zur Minimierung der Kompensatoren in den Überlappungsbereichen.

In der US-7,221,461 B2 wird vorgeschlagen, zunächst eine interferometrische Messung der gesamten Testoberfläche in geringer räumlicher Auflösung durchzuführen. In einem zweiten Schritt werden Teilbereiche der Testoberfläche mit hoher räumlicher Auflösung interferometrisch gemessen. Die aus der Messung der Teilbereiche erhaltenen Datensätze werden anschliessend mit Hilfe der aus der vorgängigen Messung der gesamten Testoberfläche erhaltenen Daten zusammengefügt.

In der US-2012/0229814 A1 werden während der interferometrischen Messung der Teilbereiche der Testoberfläche zusätzlich Positionskoordinaten der Messvorrichtung relativ zum Probekörper erhoben. Diese Positionskoordinaten werden anschliessend zum Zusammenfügen der Datensätze der Teilbereichsmessungen herangezogen.

Vorrichtungen zur Durchführung eines interferometrischen Stitching-Verfahrens sind beispielsweise in der US-7,173,691 B2, US-2008/0117436 A1 und der US-7,433,057 B2 beschrieben.

Eine Verbesserung eines interferometrischen Stitching-Verfahrens ist erzielbar, wenn die Messungen mit Hilfe eines sogenannten variablen Nullelements (variable optical null, VON) durchgeführt werden. Es handelt sich hierbei um diffraktive oder refraktive Nullelemente, welche wie vorstehend geschildert die Form der auf einen Teilbereich auftreffenden Wellenfront der Oberflächenform der Testoberfläche in diesem Bereich möglichst gut annähern. Auf diese Weise kann die Messgenauigkeit erhöht und insbesondere der in einer Messung abdeckbare Teilbereich vergrössert werden (vgl. z.B. US 2009/0079992 A1, US 2009/00251702 A1 und US-7,728,987 B2). Das Problem des korrekten Zusammenfügens der Datensätze der einzelnen Teilbereichsmessungen wird dadurch aber nicht behoben.

Es bestand daher Bedarf für ein interferometrisches Stitching-Verfahren, bei welchem die Datensätze der einzelnen Teilbereichsmessungen auf verbesserte Weise zusammengefügt werden können.

Dieses Problem wird mit dem Verfahren gemäss den Ansprüchen der vorliegenden Erfindung gelöst.

Die vorliegende Erfindung betrifft ein Verfahren zur Bestimmung einer Oberfläche eines Testkörpers, umfassend die Schritte:
a) interferometrische Messung von Teilbereichen der zu bestimmenden Oberfläche des Testkörpers, wobei sich jeweils benachbarte Teilbereiche überlappen,
b) Projektion der Datensätze aus der Messung der Teilbereiche in ein globales Koordinatensystem,
c) Bestimmung der Position benachbarter Teilbereiche im globalen Koordinatensystem,
dadurch gekennzeichnet, dass die Bestimmung der Position benachbarter Teilbereiche anhand von mindestens einem Oberflächenmerkmal im Überlappungsbereich der benachbarten Teilbereiche erfolgt.

Mit dem Verfahren der vorliegenden Erfindung wird die Form einer Oberfläche bestimmt.

Erfindungsgemäss wird unter einem Testkörper ein Objekt verstanden, welches mit dem erfindungsgemässen Verfahren untersucht werden soll. Beispielhaft sei ein optisches Element wie eine Linse genannt.

Es wurde erfindungsgemäss überraschend gefunden, dass die korrekte Positionierung benachbarter Teilbereiche in einem interferometrischen Stitching-Verfahren auf einfachere Weise anhand von mindestens einem Oberflächenmerkmal im Überlappungsbereich der benachbarten Teilbereiche erfolgen kann.

In den vorstehend beschriebenen Stitching-Verfahren aus dem Stand der Technik erfolgt die Bestimmung der Position der Teilbereiche auf der Basis exakter Positioniersysteme und aufwendiger Algorithmen zur Bestimmung der Position und Bewegung des Testkörpers im Raum. Die vorliegende Erfindung schlägt hingegen eine völlig andere Methode vor. Es werden Oberflächenmerkmale auf der Oberfläche des Testkörpers identifiziert. Die Lage dieser Oberflächenmerkmale wird in den Messungen benachbarter Teilbereiche (Sub-Aperturen) bestimmt und miteinander korreliert. Auf dieses Weise kann auf die aufwendigen Positionsbestimmungen des Testkörpers aus dem Stand der Technik verzichtet werden. Anschliessend werden die Datensätze der gemessenen Teilbereiche (Sub-Aperturen) zu einem Gesamtbild zusammengesetzt (Stitching).

Gemäss der vorliegenden Erfindung werden die Begriffe "Teilbereich" und "Sub-Apertur" synonym verwendet und bezeichnen einen Abschnitt der zu messenden Oberfläche eines Testkörpers, welcher eine geringere Fläche als die gesamte zu messende Oberfläche des Testkörpers aufweist. Die Fläche des zu messenden Teilbereichs ist abhängig von der Messmethode und der Form der Oberfläche. Bei einer Messung ohne variables Nullelement wird der Teilbereich in der Regel kleiner zu wählen sein als bei einer Messung mit variablem Nullelement. Ebenso wird bei der Messung einer erheblich von der sphärischen Form abweichenden Oberfläche der Teilbereich in der Regel kleiner zu wählen sein als bei einer Oberfläche mit im Wesentlichen sphärischer Form.

Erfindungsgemäss sind die Teilbereiche so zu wählen, dass benachbarte Teilbereiche zu einem gewissen Grad miteinander überlappen und in dem Überlappungsbereich mindestens ein nachstehend näher beschriebenes Oberflächenmerkmal identifizierbar ist. Der Überlappungsberiech ist erfindungsgemäss bevorzugt derart gewählt, dass zwei benachbarte Teilbereiche mit 1 bis 50% ihrer jeweiligen Fläche, bevorzugter 5 bis 40% und besonders bevorzugt 10 bis 30% ihrer Fläche miteinander überlappen.

Wie vorstehend erwähnt müssen optische Elemente in Hochpräzisionsgeräten sehr präzise gefertigt sein. Es lag nicht auf der Hand, bei derartigen optischen Elementen nach bestimmten Oberflächenmerkmalen zu suchen und diese Merkmale bei einem interferometrischen Stitching-Verfahren heranzuziehen. Dies lässt sich in etwa mit der Suche nach winzigen Abweichungen in einer Abbildung eines wolkenlosen blauen Himmels vergleichen. Es wurde erfindungsgemäss gefunden, dass selbst bei präzis gefertigten optischen Elementen Oberflächenmerkmale, beispielsweise in Form winziger Oberflächendefekte, vorhanden sind, welche mit geeigneten Methoden identifiziert und beim interferometrischen Stitching-Verfahren verwendet werden können.

Erfindungsgemäss kann jedes Oberflächenmerkmal verwendet werden, welches auf der zu messenden Testoberfläche identifizierbar ist. Die Form des Oberflächenmerkmals ist nicht wesentlich. Es kann sich beispielsweise um ein linienförmiges Merkmal, ein kurvenförmiges Merkmal oder um ein punktförmiges Merkmal handeln.

Vorzugsweise handelt es sich bei dem Oberflächenmerkmal um einen Oberflächendefekt, der durch die Fertigung der Oberfläche des Testkörpers hervorgerufen wurde.

Da wie vorstehend ausgeführt die erfindungsgemäss zu vermessenden Oberflächen sehr präzise gefertigt werden, sind etwaige zu verwendende Oberflächenmerkmale in der Regel nur von geringer Grösse. Typischerweise weisen die erfindungsgemäss zu verwendenden Oberflächenmerkmale eine Länge und Breite im Bereich von 0,1 mm bis 10 mm, vorzugsweise 0,5 mm bis 5 mm, sowie eine Höhe oder Tiefe von 0,1 nm bis 2 nm, vorzugsweise 0,2 bis 1 nm auf.

Erfindungsgemäss kann die Position eines Oberflächenmerkmals auf der Basis eines Korrelationsverfahrens, vorzugsweise eines Intensitäts- und Phasenkorrelationsverfahrens des mittelfrequenten und/oder hochfrequenten Anteils des Spektrums der zu messenden Oberfläche, bestimmt werden. Es hat sich gezeigt, dass insbesondere der mittel- und/oder hochfrequenten Anteil des Spektrums der Strahlung, die im erfindungsgemässen Interferometrie-Verfahren eingesetzt wird, für eine Korrelation der Intensität und der Phase der von benachbarten Teilbereichen reflektierten Strahlung geeignet ist, da dort Oberflächenmerkmale gut identifizierbar sind. Erfindungsgemäss bevorzugt werden sowohl der mittelfrequente als auch der hochfrequente Anteil des Spektrums verwendet.

Die vorliegende Erfindung wird nachstehend im Detail erläutert. Zur Veranschaulichung werden hierzu nicht einschränkende Zeichnungen verwendet. Es zeigen:
- Fig. 1: eine schematische Darstellung eines erfindungsgemäss verwendbaren Interferometers
- Fig. 2: Aufnahmen a) und b) von zwei Sub-Aperturen einer Test-oberfläche mit erfindungsgemäss verwendbaren Oberflächenmerkmalen
- Fig. 3: eine durch ein Stitching-Verfahren erhältliche Gesamtprojektion einer Testoberfläche aus mehreren kreisförmigen Sub-Aperturen mit erfindungsgemäss verwendbaren Oberflächenmerkmalen

Die vorliegende Erfindung betrifft ein interferometrisches Verfahren. Interferometrische Methoden zur Messung von Oberflächen sind hinlänglich bekannt und müssen nicht näher erläutert werden.

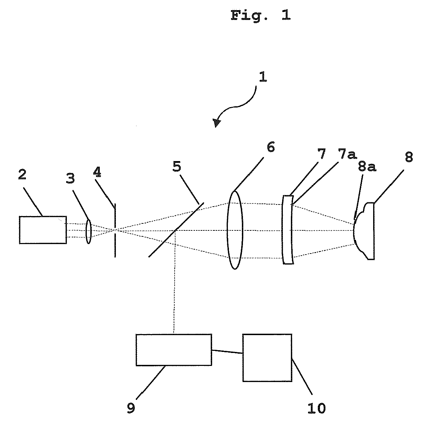

Erfindungsgemäss kann jedes zur Oberflächenmessung herkömmlich verwendete Interferometer eingesetzt werden. Erfindungsgemäss bevorzugt ist ein Fizeau-Interferometer. Das Prinzip eines beispielhaften Fizeau-Interferometers ist in Fig. 1 nicht einschränkend zu Veranschaulichungszwecken skizziert. Ein Fizeau-Interferometer 1 umfasst eine Strahlenquelle 2, beispielsweise eine Laserdiode, aus welcher kohärentes licht emittiert und durch eine Sammellinse 3 fokussiert wird. Die Strahlung tritt durch eine Lochblende 4 und gelangt auf einen Strahlenteiler 5 (beispielsweise einen teildurchlässigen Spiegel mit dünner Metallbeschichtung). Die durch den Strahlenteiler 5 tretende Strahlung wird durch eine Kollimatorlinse 6 in ein paralleles Strahlenbündel umgewandelt. Das Strahlenbündel tritt durch ein optisches Element 7, dessen von der Strahlenquelle 2 abgewandte Oberfläche 7a teildurchlässig ist und die Referenzoberfläche des Interferometers darstellt. An der Referenzoberfläche 7a wird ein Teil der Strahlung reflektiert und gelangt auf dem gleichen Weg zurück zum Strahlenteiler 5, von welchem es in einen Detektor 9 geleitet wird. Ein weiterer Teil der Strahlung tritt durch die Referenzoberfläche 7a und gelangt auf die hier asphärisch dargestellte Oberfläche 8a des Testkörpers 8. Von der Oberfläche 8a des Testkörpers 8 wird die Strahlung reflektiert und gelangt auf dem gleichen Weg zurück zum Strahlenteiler 5, von welchem es in einen Detektor 9 geleitet wird. Dort kommt es zu einer Überlagerung der von der Referenzoberfläche 7a und der von der Oberfläche 8a des Testkörpers 8 reflektierten Oberfläche und zu Interferenz. Der Detektor ist mit einer Datenverarbeitungseinheit 10, beispielsweise einem Computer, verbunden, in welchem mit Hilfe geeigneter Programmierung (Software) die in der vorliegenden Anmeldung beschriebenen Schritte der Datenverarbeitung stattfinden, beispielweise die Auswertung der interferometrischen Messung und die Lokalisation on Oberflächenmerkmalen.

Gemäss einer bevorzugten Ausführungsform der vorliegenden Erfindung kann das Interferometer ein variables Nullelement (variable optical null, VON) aufweisen. Es handelt sich hierbei vorzugsweise um diffraktive oder refraktive Nullelemente, welche wie vorstehend geschildert die Form der auf einen Teilbereich auftreffenden Wellenfront der Oberflächenform des Testkörpers in diesem Bereich möglichst gut annähern, so dass die Wellenfront möglichst orthogonal auf die Oberfläche des Testkörpers auftrifft. Auf diese Weise kann die Messgenauigkeit erhöht und insbesondere der in einer Messung abdeckbare Teilbereich vergrössert werden. Variable Nullelemente sind hinlänglich bekannt und beispielsweise in der US 2009/0079992 A1, US 2009/00251702 A1 und US-7,728,987 B2 beschrieben. Erfindungsgemäss bevorzugt sind ein Doppelkeilelement (wie in Fig. 7 und 8 der US 2009/00251702 A1 gezeigt) oder ein Hologramm als diffraktives variables Nullelement (wie in der US-7,728,987 B2 beschrieben). Das variable Nullelement wird gemäss dieser Ausführungsform zwischen dem optischen Element mit Referenzoberfläche (in Fig.1 7a) und der zu messenden Oberfläche des Testkörpers (8a in Fig. 1) angeordnet.

Der Einsatz eines variablen Nullelements ist besonders dann zu erwägen, wenn es sich bei der zu messenden Oberfläche um eine asphärische Oberfläche handelt.

Erfindungsgemäss erfolgt die interferometrische Messung der Testoberfläche abschnittsweise. Es werden erfindungsgemäss Sub-Aperturen gemessen und die so erhaltenen Daten für jede Sub-Apertur in einem Stitching-Verfahren zusammengesetzt. Stitching-Verfahren sind grundsätzlich bekannt. Es sei beispielsweise auf die US-6, 956, 657 B2 verwiesen.

Die aus den einzelnen Sub-Apertur-Messungen erhaltenen Daten werden anschliessend in ein globales Koordinatensystem projiziert, beispielsweise in eine globale Koordinatenebene. Unter einem globalen Koordinatensystem wird erfindungsgemäss ein Koordinatensystem verstanden, welches das Bezugsystem für alle gemessenen Objekte darstellt, beispielsweise ein x,y,z-Koordinatensystem. Es handelt sich hierbei um eine an sich bekannte Vorgehensweise, die beispielsweise auch in der US-6,956,657 B2 beschrieben ist.

Bei einem interferometrischen Stitching-Verfahren wird die Position des Testkörpers während des Verfahrens derart gegenüber dem Interferometer verändert, dass sukzessive sämtliche Subapertur-Abschnitte der zu messenden Oberfläche des Testkörpers gemessen werden. Hierfür sind Vorrichtungen bekannt, welche eine Bewegung des Testkörpers in sämtliche Bewegungsrichtungen erlauben. Beispielsweise sei auf die in der US-7,173,691 B2, US-2008/0117436 A1 und der US-7,433,057 B2 beschriebenen Vorrichtungen verwiesen. Derartige Vorrichtungen können erfindungsgemäss eingesetzt werden.

Es ist jedoch im Gegensatz zum Stand der Technik nicht erforderlich, die Position und Bewegung des Testkörpers während der Messungen präzise zu bestimmen beziehungsweise mit aufwendigen mathematischen Algorithmen zu ermitteln. Vielmehr werden gemäss der vorliegenden Erfindung hierfür Oberflächenmerkmale auf der zu messenden Testoberfläche verwendet, welche sich in Überlappungsbereichen benachbarter zu messender Subapertur-Bereiche befinden und eine Korrelation von sukzessive durchgeführten Messungen erlauben.

Im Gegensatz zu den aus dem Stand der Technik bekannten Verfahren wird erfindungsgemäss das Zusammenfügen (stitching) der Sub-Apertur-Messungen anhand von mindestens einem Oberflächenmerkmal im Überlappungsbereich von benachbarten Sub-Aperturbereichen durchgeführt. Erfindungsgemäss genügt hierfür bereits ein Oberflächenmerkmal. Bevorzugt ist jedoch ein Zusammenfügen auf der Basis von mehreren, vorzugsweise 2 bis 10, besonders bevorzugt 2 bis 5, derartigen Oberflächenmerkmalen.

Ein wesentlicher Aspekt des erfindungsgemässen Verfahrens besteht in der Bestimmung der Position mindestens eines Oberflächenmerkmals im Überlappungsbereich benachbarter Teilbereiche.

Wie vorstehend ausgeführt handelt es sich hierbei um Oberflächenmerkmale, in der Regel Oberflächendefekte, welche aufgrund der Präzisionsfertigung optischer Elemente nur minim und entsprechend schwer zu detektieren sind.

Es wurde erfindungsgemäss gefunden, dass die Position von Oberflächenmerkmalen auf der Oberfläche eines mit einem interferometrischen Stitching-Verfahren zu messenden Testkörpers der Basis eines Korrelationsverfahrens, vorzugsweise eines Intensitäts- und Phasenkorrelationsverfahrens des mittelfrequenten und/oder hochfrequenten Anteils des Spektrums der zu messenden Oberfläche, bestimmt werden kann. Es hat sich gezeigt, dass insbesondere der mittel- und/oder hochfrequenten Anteil des Spektrums der Strahlung, die im erfindungsgemässen Interferometrie-Verfahren eingesetzt wird, für eine Korrelation der Intensität und der Phase der von benachbarten Teilbereichen reflektierten Strahlung geeignet ist, da dort Oberflächenmerkmale gut identifizierbar sind. Erfindungsgemäss bevorzugt werden sowohl der mittelfrequente als auch der hochfrequente Anteil des Spektrums verwendet.

Die Korrelation des mittel- und/oder hochfrequenten Anteils des Spektrums der verwendeten Strahlung erfolgt vorzugsweise dadurch, dass die anderen Anteile der Strahlung mit Hilfe eines Filterelements entfernt werden. Erfindungsgemäss bevorzugt erfolgt dies mit Hilfe eines Hilbert-Filters.

Ein Hilbert-Filter ist ein digitaler Filter, in welchem ein Eingangssignal mit Hilfe der Hilbert-Transformation eine Phasenverschiebung von 90° (π/2) erfährt. Hilbert-Filter sowie die zugrundeliegende Hilbert-Transformation sind bekannt und müssen hier nicht weiter erläutert werden.

Erfindungsgemäss bevorzugt erfolgt die Bestimmung der Lage von Oberflächenmerkmalen anhand des Schlieren-Verfahrens. Das Schlieren-Verfahren ist an sich bekannt und muss hier nicht im Detail erläutert werden. Allgemein gesagt werden bei dem Schlieren-Verfahren Teile der Strahlung aus einer Quelle abgeschnitten, sodass das resultierende Bild nur aus einem Teil der von der Quelle ausgesandten Strahlung zusammengesetzt ist. Das Verfahren und seine Verwendung zur Detektion von Oberflächendefekten ist in der Literatur beschrieben (Garbusi et al., Applied Optics 44 (2005), 2963-2969).

Leitet man Licht durch eine Fourier-Linse (Sammellinse), bildet sich in der bildseitigen Brennebene der Linse das Beugungsbild des ursprünglichen Objekts. Das elektrische Feld dieses Beugungsbildes stellt die Fourier-Transformierte des elektrischen Felds in der objektseitigen Brennebene der Linse dar. Man kann nun beispielsweise mit einer in der bildseitigen Brennebene der Linse angeordneten Blende bestimmte Strahlungsfrequenzen ausblenden, welche anschliessend im zusammengesetzten Abbild nicht mehr vorhanden sind. Das Schlieren-Verfahren kann entweder mit einer entsprechenden optischen Anordnung (Bereitstellung eines "Messers" mit scharfer Kante in der bildseitigen Brennebene einer Sammellinse) oder als digitales Filter ausgebildet sein. Erfindungsgemäss bevorzugt ist die Verwendung eines digitalen Filters zur Implementierung des Schlieren-Verfahrens, insbesondere die Verwendung verschiedener digitaler Filterstufen. Derartige digitale Filter sind dem Fachmann bekannt und müssen hier nicht näher erläutert werden.

Gemäss einer weiteren Ausführungsform der vorliegenden Erfindung kann die Bestimmung der Lage von Oberflächenmerkmalen anhand des Talbot-Effekts durchgeführt werden. Das Verfahren und seine Verwendung zur Detektion von Oberflächendefekten ist in der Literatur beschrieben (Garbusi et al., Optics Communications 259 (2006), 55-59). Unter dem Talbot-Effekt versteht man das Phänomen, dass bei Transmission von Strahlung durch ein periodisches Gitter in einem bestimmten Abstand hinter dem Gitter (sogenannter Talbot-Abstand) ein Abbild des Gitters beobachtet werden kann. In einem der Hälfte des Talbot-Abstands entsprechenden Abstand vom Gitter ist ein um die Hälfte der Gitterperiode verschobenes Abbild des Gitters zu erkennen. Projiziert man dieses verschobene Abbild zurück auf das Gitter, kommt es zu einer Unterdrückung der periodischen Strukturanteile, und die nicht periodischen Anteile der Strahlung (Defekte) können gut identifiziert werden.

Erfindungsgemäss werden bevorzugt die vorstehenden Verfahren herangezogen, um die mittel- und hochfrequenten Anteile der von der Oberfläche des Testkörpers reflektierten Strahlung herauszufiltern und die dadurch identifizierbaren Oberflächenmerkmale im Stitching-Verfahren zu verwenden. Die vorliegende Erfindung ist aber nicht auf diese Methoden beschränkt.

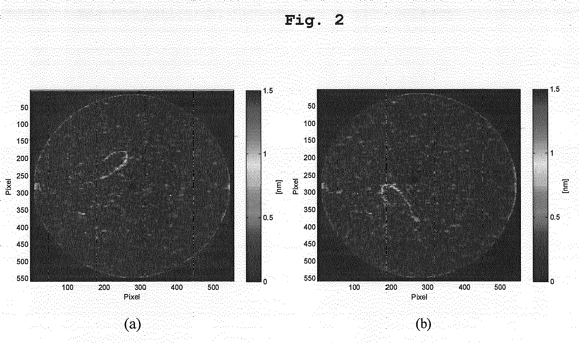

In Fig. 2 ist ein Beispiel einer Bestimmung eines Oberflächenmerkmals gezeigt. Die Figuren 2a und 2b stellen Aufnahmen benachbarter Teilbereiche der Oberfläche eines Testkörpers dar. Der Testkörper war eine polierte sphärische Oberfläche aus Quarzglas (Fused Silica). Die Oberfläche wurde auf konventionelle Bearbeitung hergestellt. Die Aufnahmen wurde mit Hilfe eines Hilbert-Filters verarbeitet. In den so erhalten Abbildungen in Fig. 2a und 2b ist insbesondere ein hakenförmiger Oberflächendefekt erkennbar, welcher eine Höhe von ca. 0,6 nm aufweist. Des Weiteren ist ein punktförmiger Oberflächendefekt erkennbar.

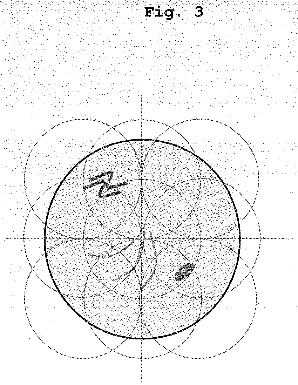

In Fig. 3 sind erfindungsgemäss aufgenommene Teilbereiche (Sub-Aperturen) gezeigt, wobei benachbarte Teilbereiche überlappen (in Fig. 3 mit etwa 30% ihrer jeweiligen Fläche). In den Überlappungsbereichen befinden sich Oberflächenmerkmale (in Fig. 3 sind lediglich beispielhaft für einige Teilbereiche Oberflächenmerkmale gezeigt). Wie in Fig. 3 gezeigt können die benachbarten Teilbereiche dadurch exakt zueinander positioniert werden, dass die identifizierten Oberflächenmerkmale zueinander korreliert (zur Deckung gebracht) werden.

Die vorliegende Erfindung betrifft weiterhin eine Vorrichtung zur Durchführung des vorstehend beschriebenen erfindungsgemässen Verfahrens, umfassend ein Interferometer, eine Einheit zur Bewegung eines Testkörpers, eine Datenverarbeitungseinheit sowie eine Einheit zur Bestimmung mindestens eines Oberflächenmerkmals.

Vorrichtungen zur interferometrischen Messung von Oberflächen sind aus dem Stand hinlänglich bekannt. Beispielsweise sei auf die US-7,173,691 B2, US-2008/0117436 A1 und die US-7,433,057 B2 verwiesen. Erfindungsgemäss kann jede derartige Vorrichtung eingesetzt werden, sofern sie zusätzlich mit einer Einheit zur Bestimmung mindestens eines Oberflächenmerkmals ausgestattet wird.

Erfindungsgemäss bevorzugt ist das Interferometer ein Fizeau-Interferometer. Fizeau-Interferometer sind hinlänglich bekannt. Ein Beispiel eines erfindungsgemäss verwendbaren Fizeau-Interferometers wurde vorstehend anhand von Fig. 1 erläutert. Die Einheit zur Bestimmung mindestens eines Oberflächenmerkmals ist vorzugsweise ein Hilbert-Filter, insbesondere ein digitaler Hilbert-Filter.

Analog zum Stand der Technik erfolgt auch beim erfindungsgemässen Verfahren die interferometrische Messung der Teilbereiche mittels einer Bewegung des Testkörpers.

Erfindungsgemäss ist es nicht erforderlich, die Vorrichtung zur interferometrischen Messung mit Mitteln zur präzisen Positionsbestimmung des Testkörpers während der Messung unterschiedlicher Teilbereiche auszustatten. Wie vorstehend erwähnt wird stattdessen erfindungsgemäss eine Positionsbestimmung anhand von Oberflächenmerkmalen durchgeführt. Es ist aber selbstverständlich möglich, zumindest teilweise zusätzlich Mittel zur präzisen Positionsbestimmung des Testkörpers während der Messung unterschiedlicher Teilbereiche heranzuziehen, um das Messergebnis zusätzlich zu optimieren.

Wie vorstehend ausgeführt ist es bei der Messung asphärischer Oberflächen vorteilhaft, ein variables Nullelement einzusetzen. Ohne variables Nullelement sollten vorzugsweise kleinere Sub-Aperturen vermessen beziehungsweise verfeinerte Optimierungsverfahren eingesetzt werden.

Das erfindungsgemässe Verfahren ist zur Messung sämtlicher Oberflächenformen geeignet. Beispielshaft seien plane, sphärische und asphärische Oberflächen genannt. Erfindungsgemäss bevorzugt ist zu bestimmende Oberfläche des Testkörpers asphärisch. Die Vorteile der vorliegenden Erfindung kommen besonders bei Testkörpern mit komplexen Oberflächen zur Geltung. Es ist erfindungsgemäss bevorzugt, dass die zu bestimmende Oberfläche des Testkörpers einen Durchmesser von mehr als 150 mm aufweist. Es ist weiterhin erfindungsgemäss bevorzugt, dass die zu bestimmende Oberfläche hochgeöffnet ist. Gemäss der vorliegenden Erfindung wird unter einer hochgeöffneten Oberfläche eine Oberfläche verstanden, welche eine grosse numerische Apertur aufweist. Die numerische Apertur A eines optischen Elements ist definiert als A = n · sin σ, wobei n der Brechungsindex des Mediums zwischen betrachtetem Objekt und Oberfläche des optischen Elements (im üblichen Fall von Luft als Medium ist n=1) und σ der halbe Öffnungswinkel der Oberfläche des optischen Elements ist. Erfindungsgemäss wird unter einer hochgeöffneten Oberfläche eine Oberfläche mit einer numerischen Apertur im Bereich von 0.6 bis 0.95, vorzugsweise 0.75 bis 0.9 verstanden.

Das erfindungsgemässe Verfahren wird bevorzugt bei der Herstellung optischer Elemente eingesetzt. Bei diesen optischen Elementen handelt es sich vorzugsweise um Linsen jeglicher Art, welche in optischen Geräten wie Mikroskopen oder Teleskopen zum Einsatz kommen.

Die vorliegende Erfindung betrifft somit auch ein Verfahren zur Herstellung eines optischen Elements, umfassend die Schritte:
a) Fertigung eines optischen Elements
b) Bestimmung der Oberfläche des optischen Elements
c) Gegebenenfalls Bearbeitung des optischen Elements zur Behebung von in Schritt b) ermittelten Abweichungen
d) Gegebenenfalls Wiederholung der Schritte b) und c) bis zum Erhalt des optischen Elements mit gestellten Spezifikationen,
dadurch gekennzeichnet, dass Schritt b) mit dem hier beschriebenen erfindungsgemässen Bestimmungsverfahren durchgeführt wird.

Die Fertigung optischer Elemente ist hinlänglich bekannt und muss hier nicht näher erläutert werden. Bekannt sind beispielsweise Schleifverfahren zur Bearbeitung von Oberflächen.

Das gefertigte optische Element wird anschliessend mit dem erfindungsgemässen Verfahren untersucht. Es wird hierdurch festgestellt, ob das gefertigte optische Element bereits den Vorgaben an die Oberflächenform und den damit verbundenen optischen Eigenschaften genügt. Diese Vorgaben werden vorab definiert und sind von der Applikation des optischen Elements abhängig. Sollten die Vorgaben noch nicht ausreichend erfüllt sein, wird dies mit Hilfe des erfindungsgemässen Verfahrens festgestellt. Das optische Element wird in diesem Fall einer Nachbearbeitung unterzogen. Es handelt sich hierbei üblicherweise um ein bekanntes Verfahren zur Oberflächenbearbeitung, beispielsweise Schleifen oder Polieren.

Nach abgeschlossener Nachbearbeitung sollte das optische Element vorzugsweise nochmals mit Hilfe des erfindungsgemässen Verfahrens auf etwaige Abweichungen von den Vorgaben untersucht werden. Erst wenn das Ergebnis erhalten wird, dass das optische Element den Vorgaben genügt, ist das Verfahren abgeschlossen und das gewünschte optische Element fertiggestellt.

## Patentansprüche

1. Verfahren zur Bestimmung einer Oberfläche eines Testkörpers, umfassend die Schritte:
a) interferometrische Messung von Teilbereichen der zu bestimmenden Oberfläche des Testkörpers, wobei sich jeweils benachbarte Teilbereiche überlappen,
b) Projektion der Datensätze aus der Messung der Teilbereiche in ein globales Koordinatensystem,
c) Bestimmung der Position benachbarter Teilbereiche im globalen Koordinatensystem,
**dadurch gekennzeichnet, dass** die Bestimmung der Position benachbarter Teilbereiche anhand von mindestens einem Oberflächenmerkmal im Überlappungsbereich der benachbarten Teilbereiche erfolgt.

2. Verfahren nach Anspruch 1, **dadurch gekennzeichnet, dass** es sich bei dem mindestens einen Oberflächenmerkmal um einen Oberflächendefekt handelt.

3. Verfahren nach einem der vorhergehenden Ansprüche, **dadurch gekennzeichnet, dass** das mindestens eine Oberflächenmerkmal auf der Basis eines Intensitäts- und Phasenkorrelationsverfahrens des mittelfrequenten und/oder hochfrequenten Anteils des Spektrums der zu messenden Oberfläche bestimmt wird.

4. Verfahren nach Anspruch 3, **dadurch gekennzeichnet, dass** die Bestimmung des mindestens einen Oberflächenmerkmals auf der Basis eines Hilbert-Filters erfolgt.

5. Verfahren nach Anspruch 3, **dadurch gekennzeichnet, dass** die Bestimmung des mindestens einen Oberflächenmerkmals anhand des Schlieren-Verfahrens erfolgt.

6. Verfahren nach Anspruch 3, **dadurch gekennzeichnet, dass** die Bestimmung des mindestens einen Oberflächenmerkmals anhand des Talbot-Effekts erfolgt.

7. Verfahren nach einem der vorhergehenden Ansprüche, **dadurch gekennzeichnet, dass** die zu bestimmende Oberfläche des Testkörpers asphärisch ist.

8. Verfahren nach einem der vorhergehenden Ansprüche, **dadurch gekennzeichnet, dass** die zu bestimmende Oberfläche des Testkörpers einen Durchmesser von mehr als 150 mm aufweist.

9. Verfahren nach einem der vorhergehenden Ansprüche, **dadurch gekennzeichnet, dass** die Oberfläche hochgeöffnet ist.

10. Verfahren nach einem der vorhergehenden Ansprüche, **dadurch gekennzeichnet, dass** die interferometrische Messung der Teilbereiche mittels einer Bewegung des Testkörpers durchgeführt wird.

11. Vorrichtung zur Durchführung des Verfahrens gemäss einem der Ansprüche 1 bis 10, umfassend ein Interferometer, eine Einheit zur Bewegung eines Testkörpers, eine Datenverarbeitungseinheit sowie eine Einheit zur Bestimmung mindestens eines Oberflächenmerkmals.

12. Vorrichtung nach Anspruch 11, **dadurch gekennzeichnet, dass** das Interferometer ein Fizeau-Interferometer ist.

13. Vorrichtung nach Anspruch 11 oder 12, **dadurch gekennzeichnet, dass** die Einheit zur Bestimmung mindestens eines Oberflächenmerkmals einen Hilbert-Filter umfasst.

14. Vorrichtung nach Anspruch 13, **dadurch gekennzeichnet, dass** die Einheit zur Bestimmung mindestens eines Oberflächenmerkmals zur Durchführung des Schlieren-Verfahrens oder zum Nachweis des Talbot-Effekts geeignet ist.

15. Verfahren zur Herstellung eines optischen Elements, umfassend die Schritte:
a) Fertigung eines optischen Elements
b) Bestimmung der Oberfläche des optischen Elements
c) Gegebenenfalls Bearbeitung des optischen Elements zur Behebung von in Schritt b) ermittelten Abweichungen
d) Gegebenenfalls Wiederholung der Schritte b) und c) bis zum Erhalt des optischen Elements mit gestellten Spezifikationen,
**dadurch gekennzeichnet, dass** Schritt b) mit einem Verfahren gemäss einem der Anspruche 1 bis 10 durchgeführt wird.
